Europäisches Patentamt

European Patent Office

Office européen des brevets

(11) Publication number: **0 160 627**
**B1**

## EUROPEAN PATENT SPECIFICATION

(45) Date of publication of patent specification: **14.09.88**

(21) Application number: **85830104.7**

(22) Date of filing: **03.05.85**

(51) Int. Cl.⁴: **A 47 G 19/18,** B 67 D 5/02,
B 67 D 5/56, B 67 D 5/42

(54) **Cruet for metering and delivering condiments for use at a dining table.**

(30) Priority: **04.05.84 IT 938984**

(43) Date of publication of application:
**06.11.85 Bulletin 85/45**

(45) Publication of the grant of the patent:
**14.09.88 Bulletin 88/37**

(84) Designated Contracting States:
**BE DE FR GB NL**

(56) References cited:
**AT-B- 150 052**
**AT-B- 168 736**
**AT-B- 350 414**
**DE-B-2 009 926**
**FR-A-2 443 422**

(73) Proprietor: **Bisconti, Silvia**
**Via Belvedere, 1**
**I-50015 Impruneta hamlet Poggio Ugolino**
**Firenze (IT)**

(72) Inventor: **Bisconti, Silvia**
**Via Belvedere, 1**
**I-50015 Impruneta hamlet Poggio Ugolino**
**Firenze (IT)**

(74) Representative: **Mannucci, Gianfranco, Dott.-Ing.**
**Ufficio Tecnico Ing. A. Mannucci Via della Scala 4**
**I-50123 Firenze (IT)**

Courier Press, Leamington Spa, England.

## Description

It is known that at a dining table several liquid condiments are required—for example, but not exclusively, oil and vinegar or lemon—which are to be sprinkled over the food to be "dressed"; at present, the metering of the individual condiments and their mutual proportionment depends on the user's ability. The individual condiments are mostly held either in independent or combined containers, but always for an independent and successive distribution.

This invention has the purpose to permit the desired proportionment between two (or more) condiments as well as a desired and controlled metering of the dressing mixture to be delivered.

The present invention provides a cruet for metering and delivering condiments for use at a dining table, particularly for oil and other condiments which comprises a cruet-like container for the main component, such as oil, and a body fitted as an obturator of said container, the body including the following: a mixture container for delivery of a metered mixture, at least one reservoir for a secondary component such as vinegar, lemon, a pump means for sucking the main component and discharging it into the mixture container in controllable amounts, and a passage with adjustable cross-section between said reservoir and the suction duct of the pump means for metering in adjustable proportions the second component with respect to the main component.

The mixture container and the reservoir for the secondary component may flank on opposite sides the pump means, the suction duct of which has a valve and dips in the cruet-like container of the main component.

Further particular embodiments of the invention are set out in the dependent claims 3 to 6.

Said passage in practice presents an adjustable orifice, with a valve means displaceable through an adjustable stroke by a screw ledge having a metering control knob, for determining the amount of the secondary component of the mixture.

The pump means is able to suck unitary, constant amounts of the components for metering the amount of mixture through the number of pump strokes. Said pump means may be of rotary type with blades or similar, or of piston-cylinder type, for example of double-piston type with opposite pistons.

The invention will be better understood by the following description and the attached drawing which shows a non-limitative exemplification of said invention.

In the drawing:

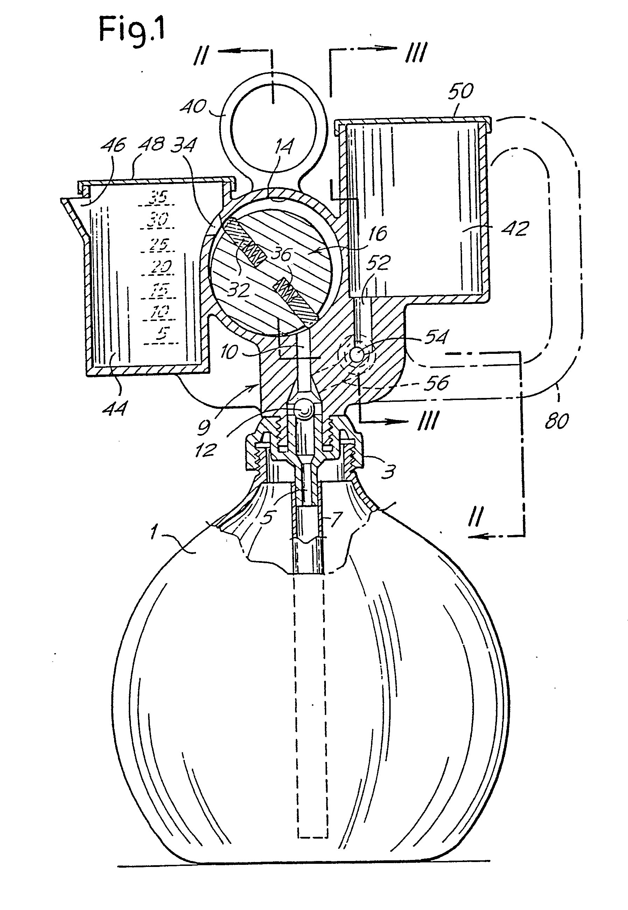

Fig. 1 shows an outside view partially in section of a metering cruet according to the invention, made up with a pump means to be angularly handled;

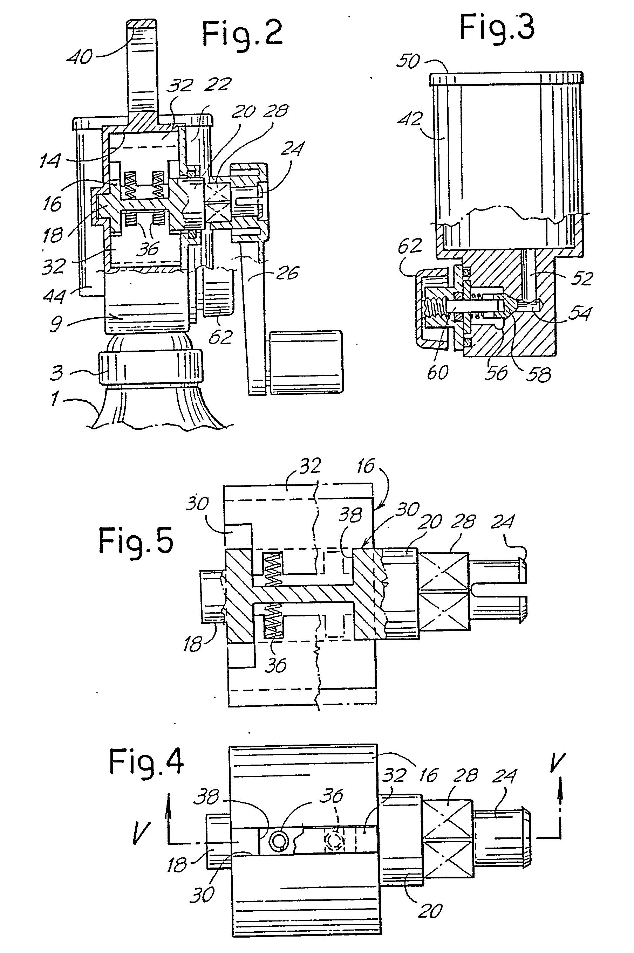

Figs. 2 and 3 show local sections through lines II—II and III—III of Fig. 1;

Figs. 4 and 5 shows the rotor alone.

In the drawing, numeral 1 indicates a cruet-like container for the main component of a mixture of two condiments, for example oil which is used in percentages much higher than the ones of the secondary components (lemon, vinegar or other). The upper orifice of the container 1 is closed by a fitting 3 forming a passage 5 and a valve seat; the fitting 3 is so shaped as to form the connection for a short pipe 7 for suction in the container 1. To the fitting 3 a body 9 is connected—by screw means for example—which presents a passage 10 as a continuation of the passage 5 and capable to engage a ball 12 making up the suction valve. The passage 10 goes into a cylindrical cavity 14 having horizontal axis, that is, at right angle to the cruet 1 axis; said cavity is the seat of an eccentric rotor 16 of a rotary pump. The rotor 16 is mounted directly with an axial appendix 18 in a support formed by the body 9 and with an axial appendix 20 in a support formed by a lid 22 applied sideways on the body 9 to close the cavity 14. A snap coupling appendix 24 engages a crank 26 to a portion of non circular section 28 of the rotor 16, for the handling of the same. The rotor 16 presents axial and radial grooves 30 for receiving blades 30 apt to cooperate with the internal surface of the cavity 14 in order to define variable volume cavities between the passage 10 and an outlet 34; the blades 32 are for example two and are forced to slide radially in centrifugal direction into the axial and radial grooves 30 so they are biased by small springs 36 which operate between the two opposite blades and which are located in radial slots 38 being filleted to the two grooves 30.

The body 9 forms—at opposite sides of the cavity 14 and of an overhanging gripping ring 40—a reservoir 42 for the secondary component of the dressing and respectively a mixture container 44. The outlet 34 of the pump 14, 16, 32 leads into the mixture container 44 and the latter is provided with a spout 46 for delivery and, advantageously, also with a lid 48. The reservoir 42 for the secondary component of the mixture (vinegar, lemon-juice or other) is also advantageously closed by a lid 50. At the bottom, a well-shaped passage 52 extends from said reservoir and continues with a horizontal length 54 forming a seat for a member apt to create a section of an adjustable passage for the inlet of the secondary component into the passage 10 through the fitting 56. The horizontal length 54 is developed with two diameters, in order to form a seat with which an obturator 58 can cooperate, said obturator being mounted on a threaded stem 60 axially adjustable by rotating a side adjustment knob 62. The obturator 58 is elastically biased against the seat formed in the passage 54, and may be lifted therefrom according to adjustable amounts by the adjustment of stem 60, and after all it allows to adjust quite finally the passage section of the secondary component which, from the reservoir 42, must reach the passage 10 to mix with the first component sucked through the valve 12, the passage 5 and the small pipe 7 of the cruet container 1. The adjustment of this pasage section permits a change at will the mutual proportionement of the two dressing components, while the pump means manoeuvre—made, by way of example, by the members and parts 14, 16, 32, 26—allows to suck at will desired amounts of mixture which are obtainable by prolonging more or less the manoeuvre of the crank 26. The obturator 58 prevents the contents of container 42 from going out until the pump depression raises it from the seat.

The mixture—which is formed by suction of the first component through passage 7, 5, 12, 10 and of the second component through passage 52, 54, 56 and through the adjustable section described above—is discharged into the mixture container 44 and may be easily delivered out from spout 46; the mixture amount metered by the pump manoeuvre may be used all at once or—if desired——made to stand in the container 44. It should be also clear that an immediate and total mixture delivery from the container 44, at once after the discharge therein by means of the pump manoeuvre, allows for an exact amount metering and a mixing without any trend to separation through the various components stratification.

Numeral 80 indicates a handle for pouring the mixture into 44.

It should be appreciated that the drawing shows an exemplication given only as a practical demonstration of the invention as said invention may vary in the forms and dispositions without nevertheless departing from the scope of the claims. For instance, it may provide a different pumping system, even of piston-type rather than rotary-type. In particular, a pump system may be provided with a horizontal cylinder, that is, providing a cavity similar to the 14 one and with only one piston, or even with two opposite pistons to operate a substantially balanced manoeuvre of the pumping system.

### Claims

1. A cruet for metering and delivering condiments for use at a dining table, in particular for oil and other condiments, characterized by the fact of comprising a cruet-like container for the main component, such as oil, and a body (9) fitted as an obturator of said container (1), the body (9) including the following: a mixture container (44) for delivery of a metered mixture, at least one reservoir (42) for a secondary component, such as vinegar, lemon, a pump means (14, 16, 32, 26) for sucking the main component and discharging it into the mixture container (44) in controllable amounts, and a passage (52, 54, 56) with adjustable cross-section between said reservoir (42) and the suction duct (10) of the pump means for metering in adjustable proportions the second component with respect to the main one.

2. A cruet according to the preceding claim, characterized by the fact that the mixture container (44) and the container (42) of the secondary component flank on opposite sides the pump means (14, 16, 32, 26), the suction duct (10) of which has a valve (12) and dips in the cruet container (1) of the main component.

3. A cruet according to either of claims 1 or 2, characterized by the fact that said passage (52, 54, 56) has a valve (58) with adjustable lift through a ledge with a stem screw (60) displaceable with a metering control knob (62) for determining the amount of the second component of the mixture by the adjustment of the orifice of the passage (52, 54, 56) for the transit of the secondary component.

4. A cruet according to the preceding claims, characterized by the fact that the pump means (14, 16, 32, 26) is apt to suck unitary, constant amounts of the components for metering the amount of mixture.

5. A cruet according to claims 1 to 4, characterized by the fact that the pump means (14, 16, 32, 26) is of rotary type with blades or the like.

6. A cruet according to claims 1 to 4, characterized by the fact that the pump means is of piston-cylinder type, for example of double-piston type with opposite pistons.

### Patentansprüche

1. Auf einem Esstisch anwendbare Flasche zum Dosieren und Abgeben von Würzmitteln, insbesondere für Öl und andere Würzmittel, dadurch gekennzeichnet, daß sie einen flaschenförmigen Behälter für den Hauptbestandteil, wie Öl, und ein als Verschluß für den genannten Behälter (1) angebrachtes Geha8use (9) umfaßt, wobei das Gehäuse (9) einen Mischungsbehälter (44) zum Abgeben einer dosierten Mischung, mindestens einen Behälter (42) für einen Zweitbestandteil, wie Essig oder Zitrone, eine Pumpeinrichtung (14, 16, 32, 26) zum Ansaugen des Hauptbestandteils und zum Gießen desselben in regelbare Mengen in den Mischungsbehälter (44), und einen mit einstellbarem Querschnitt versehenen, zwischen dem genannten Behälter (42) und dem Ansaugkanal (10) der Pumpeinrichtung angeordneten Durchlaß (52, 54, 56) zum Dosieren des Zweitbestandteils in einstellbaren Anteilen mit Bezug auf den Hauptbestandteil, umfaßt.

2. Flasche nach dem vorhergehenden Anspruch dadurch gekennzeichnet, daß der Mischungsbehälter (44) und der Behälher (42) für den Zweitbestandteil seitlich der Pumpeinrichtung (14, 16, 32, 26) auf gegenüberliegenden Seiten derselben angeordnet sind, wobei der Ansaugkanal (10) der Pumpeinrichtung ein Ventil (12) aufweist und in den flaschenartigen Hauptbestandteilsbehälter (1) eintaucht.

3. Flansche nach Anspruch 1 oder 2, dadurch gekennzeichnet, daß der genannte Durchlaß (52, 54, 56) ein Ventil aufweist, dessen Hubhöhe mittels eines, mit einem Dosierregelungsgriff (62) zur Festlegung der Menge des Zweitbestandteils der Mischung durch Einstellen der Durchlaßöffnung (52, 54, 56) für den Durchfluss des Zweitbestandteils verschiebbaren, gewindespindelförmigen Anschlags (60) einstellbar ist.

4. Flasche nach den vorhergehenden Ansprüchen, dadurch gekennzeichnet, daß die Pumpenrichtung (14, 16, 32, 26) zum Ansaugen einheitlicher, konstanter Bestandteilsmengen zur Dosierung der Mischungsmenge geeignet ist.

5. Flasche nach den Ansprüchen 1 bis 4, dadurch gekennzeichnet, daß die Pumpeinrichtung (14, 16, 32, 26) eine rotierende Kapselpumpe oder dgl. ist.

6. Flasche nach den Ansprüche 1 bis 4, dadurch gekennzeichnet, daß die Pumpenrichtung eine Hubkolbenpumpe, z.B. mit gegenläufigen Doppelkolben, ist.

**Revendications**

1. Burette permettant la mesure et la distribution de condiments et destinée à être utilisée pour le service de table, en particulier pour l'huile et d'autres condiments, caractérisée par le fait qu'elle comporte un récipient type burette pour le composant principal tel que l'huile et un corps (9) prévu pour obturer ledit récipient (1), le corps (9) comprenant les éléments suivants: un récipient de mélange (44) pour fournir un mélange dosé, au moins un réservoir (42) pour un composant secondaire tel que du vinaigre ou du citron, un moyen de pompage (14, 16, 32, 26) pour aspirer le composant principal et l'envoyer dans le récipient de mélange (44) en quantités contrôlées, un passage (52, 54, 56), dont la section transversale est réglable, étant prévu entre ledit réservoir (42) et le conduit d'aspiration (10) du moyen de pompage pour mesurer, en proportions réglables, le second composant par rapport au composant principal.

2. Burette selon la revendication précédente, caractérisée par le fait que le récipient de mélange (44) et le récipient (42) du composant secondaire sont disposés de part et d'autre sur les faces opposées du moyen de pompage (14, 16, 32, 26) dont le conduit d'aspiration (10) comporte une soupape (12) et plonge dans le récipient-burette (1) du composant principal.

3. Burette selon l'une des revendications 1 ou 2, caractérisé par le fait que ledit passage (52, 54, 56) comporte une soupape (58), apte à être levée de façon réglable dans un épaulement grâce à une tige de vis (50), déplaçable par l'intermédiaire d'un bouton de commande de dosage (62), pour déterminer la quantité de deuxième composant du mélange par réglage de l'orifice de passage (52, 54, 56) servant au transit du composant secondaire.

4. Burette selon les revendications précédentes, caractérisée par le fait que le moyen de pompage (14, 16, 32, 26) est apte à aspirer des quantités unitaires et constantes des composants pour doser le mélange.

5. Burette selon les revendications 1 à 4, caractérisée par le fait que le moyen de pompage (14, 16, 32, 26) est du type rotatif avec des ailettes ou similaires.

6. Burette selon les revendications 1 à 4, caractérisée par le fait que le moyen de pompage est du type piston-cylindre, par exemple du type à double piston avec des pistons opposés.

# Fig.1

# Fig.2

# Fig.3

# Fig.5

# Fig.4